# EUROPEAN PATENT SPECIFICATION

(11) **EP 4 103 857 B1**
(45) Date of publication and mention of the grant of the patent: **27.08.2025**
(21) Application number: 21700949.7
(22) Date of filing: 20.01.2021
(51) Int. Cl.: F16C 29/04, B25D 17/02, B28D 1/26, E02D 7/08, E02F 3/96

(54) **TOOL FOR BREAKING ROCKS**
WERKZEUG ZUM BRECHEN VON GESTEIN
OUTIL POUR BRISER DES ROCHES

(30) Priority: 14.02.2020 GB 202002042
(43) Date of publication of application: 21.12.2022
(73) Proprietor: Rock Extraction Limited, Banbridge County Down BT32 4RT (GB)
(72) Inventor: JACKMAN, Stephen, Hampshire GU34 4BW (GB); PFEUFFER, Falko, 57648 Unnau (DE); DAWSON, Ian, County Down BT21 0QJ (GB)
(74) Representative: FRKelly
(86) International application number: PCT/EP2021/051203
(87) International publication number: WO 2021/160393

(56) References cited:
- WO-A1-2007/054674
- CN-A- 104 018 540
- DE-A1- 2 120 517
- GB-A- 1 180 436
- GB-A- 355 344
- KR-A- 20060 122 428
- US-A- 4 785 893

## Description

### FIELD OF THE INVENTION

This invention relates to a tool for breaking rocks and in particular a tool for breaking rocks of an improved design that can be powered electrically.

### BACKGROUND OF THE INVENTION

Rock breaking tools are typically used as an attachment device for an excavator when the intention is to break rock, concrete or some other relatively hard material. A tool for such purposes typically has a percussion device adapted to impart impacts to a tool head and thereby transmitted such impacts to the material to be broken. The percussion device typically has a pneumatically or hydraulically driven percussion piston that performs a reciprocating motion and hits an impact surface at a top end of the tool head. At the same time as impacts are provided by the percussion piston, the tool head is pressed against the material to be broken and the tip of the tool head penetrates into the material to be broken under the influence of the percussion device.

Generally, such rock breaking tools are used in an upright orientation with the tool head extending from a lower end of the tool. The rapid reciprocating action of the percussion device against the tool head creates substantial vibrational forces which, as well as breaking rocks, are transmitted to the excavator or other work machine to which the rock breaking tool is attached, leading to rapid wear of both the tool and its supporting structure and possible injury to an operator. Such rock breaking tools tend be heavy due to the requirement to withstand the vibrational forces generated during use of the tool. Furthermore, the use of a pneumatically or hydraulically driven percussion device also requires a supply of pressurised fluid with associated leak prone pipework and fittings. Other known systems use a heavy weight behind a tool head that is arranged to fall under gravity to impart acceleration to the tool head. Such systems require substantial height to provide sufficient time for acceleration of the tool head under gravity. DE2120517 discloses an example of a rock breaking tool using a hydraulically driven piston to provide initial acceleration to the tool head before it falls under the action of gravity.

An object of the present invention is to provide a tool for breaking rocks which overcomes the abovementioned problems with the prior art.

### SUMMARY OF THE INVENTION

According to the present invention there is provided tool for breaking rocks as claimed in claim 1.

The guide means may be adapted to be arranged, in use, such that said tool head extends from a lower end of said guide means when in its extended position, the tool head being displaceable between its extended and retracted positions along a vertical axis.

The guide means may be adapted to be mounted on an arm of an excavator.

The guide means may comprise a hollow tubular body within which said tool head is axially slideable, said distal end of the tool head extending trough a hole in an end of the guide means when in its extended position.

In one embodiment the drive means may comprise a first rack mounted on the tool head, said drive part of the drive means comprises a first motor driven pinion mounted on the guide means to be driven by a drive motor and adapted to drivingly engage the first rack of the driven part to displace the tool head with respect to said guide means upon rotation of the pinion. Preferably said drive motor comprises an electric motor operated under the control of said controller. The first rack may be arranged on the tool head such that the first pinion disengages from an end of the first rack as the tool head approaches its extended position, thereby decoupling the drive part of the drive means from the driven part of the drive means.

The drive means may further comprise a second rack mounted on the tool head and a second motor driven pinion mounted on the guide means and adapted to be drive by said drive motor and drivingly engage the second rack to displace said tool head between its extended and retracted positions upon rotation of the second pinion in a first direction, the second pinion incorporating a clutch adapted to decouple the pinion from the drive motor upon rotation of the second pinion in a second direction, opposite said first direction. The first and second pinions may be mounted coaxially on an output shaft of the drive motor, said first and second racks being mounted alongside and parallel to one another on a side of the tool head.

In an alternative embodiment the first pinion may incorporate a clutch under the control of said controller, whereby said clutch may be adapted to decouple the first pinion from the electric motor before the tool head reaches its extended position. It is envisaged that other types of drive means may be provided for moving the tool head between its retracted and extended positions while decoupling the driven part of the drive means from the drive part as the tool head approaches its extended position.

Preferably the distal end of the tool head terminates in a tip. The tip may be separable from the remainder of the tool head to allow replacement and/or exchange of the tip.

The guide means may include shock absorbing means acted upon by the tool head when it reaches its extended position.

### BRIEF DESCRIPTION OF THE DRAWINGS

A tool in accordance with an embodiment of the present invention will now be described, by way of example only, with reference to the accompanying drawings, in which :-
Figure 1 is a perspective view of a tool in accordance with an embodiment of the present invention with the tool head in its retracted or raised position;
Figure 2 is a longitudinal sectional view of the tool of Figure 1 with the tool head in its extended position;

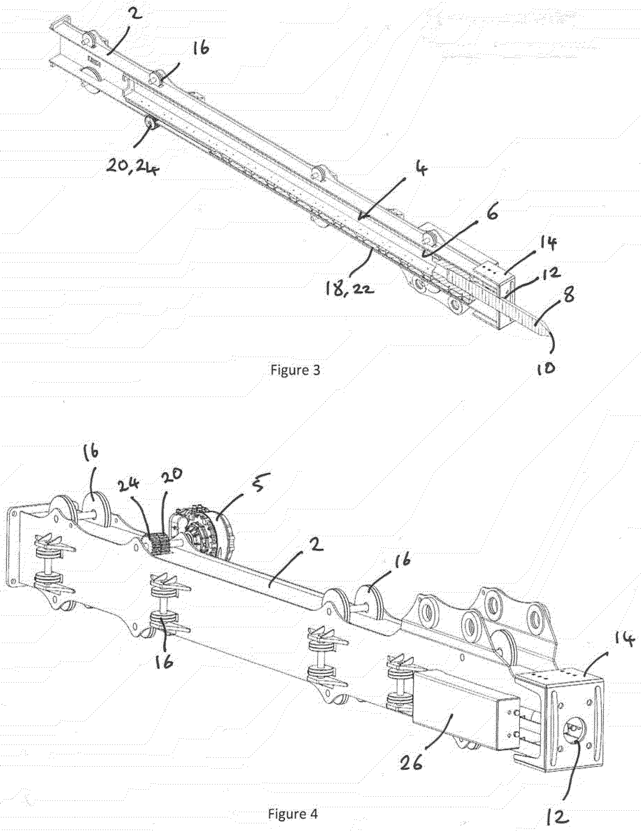

Figure 3 is a perspective sectional view of the tool of Figure 1;
Figure 4 is a perspective view of the tool of Figure 1 with the tool head removed; and
Figure 5 is a detailed view of the lower end of the guide tube of the tool of Figure 1.

### DETAILED DESCRIPTION OF THE DRAWINGS

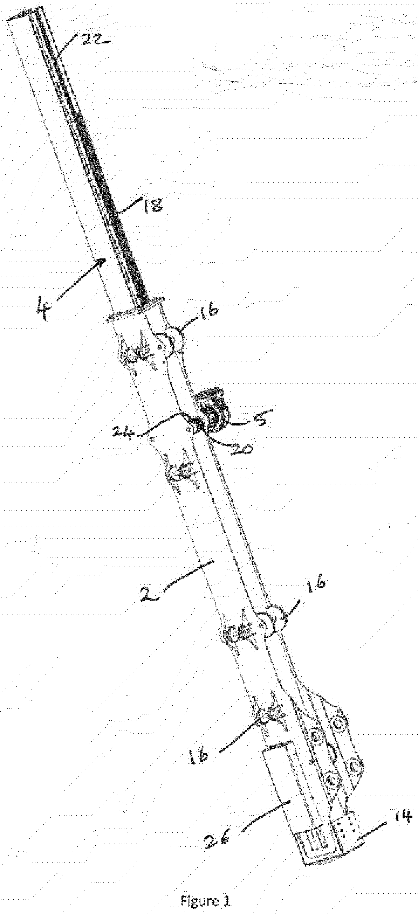

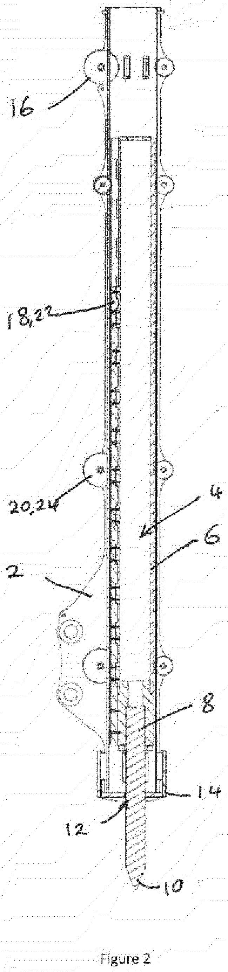

As illustrated in the drawings, a tool for breaking rocks or any other relatively hard material in accordance with the present invention comprises an elongate hollow guide tube 2 having coaxially mounted therein a tool head 4 driven by a drive means, more preferably an electric drive means in the form of an electric motor 5, to be slideably moveable along the length of the guide tube 2 between a raised or retracted position, shown in Figure 1, and a lower or extended position, shown in Figure 2.

In the embodiment shown, the guide tube 2 is adapted to be mounted on a distal end of an arm of an excavator to be supported in a substantially vertical orientation via a suitable coupling. However, it is envisaged that the tool may be adapted to be mounted on any other type of support arrangement or device or may comprise part of a specific rock breaking vehicle or device.

The tool head 4 comprises a body portion 6 slideably mounted within the guide tube 2 and an elongate tool member 8 of the tool head 4 extending from a lower end of the body portion 6 and terminating in a rock breaking tip 10. When the tool head 4 is in its extended position the elongate tool member 8 of the tool head 4 extends from a lower end of the guide tube 2 through an opening 12 in an end cap 14 of the guide tube 2. In a preferred embodiment at least the tip 10 of the tool member 8 is detachable from the remainder of the tool head 4 to facilitate replacement of the tip 10 when worn or exchange of the tip 10 to suit the material to be broken.

The guide tube 2 may comprise a square cross section hollow column, the body portion 6 of the tool head 4 being slideably mounted within the guide tube 2. The body portion 6 of the tool head 4 is supported and guided for axial movement within the guide tube 2 via rollers 16 mounted on the side walls of the guide tube 2, allowing the tool head 4 to freely slide within the guide tube 2 between its retracted and extended positions. The rollers 16 may be spring loaded against the inner walls of the guide tube 2.

In the embodiment shown in the drawings, a driven part of the drive means comprises a first toothed rack 18 mounted on at least one side of the body portion 6 of the tool head 4, a drive part of the drive means comprising a first pinion 20 mounted an output shaft of an electric motor 5 mounted on the guide tube 2, such that the first pinion 20 drivingly engages the first toothed rack 18, the first pinion 20 being affixed to the output shaft of the electric motor 5, whereby the motor 5 is adapted to be operated, under the control of a controller, to rotate the first pinion 20 and thereby axially displace and rapidly accelerate the tool head 4 within the guide tube 2 from its retracted position towards its extended position, as will be described below in more detail.

An upper end of the first toothed track 18 terminates at a position spaced from upper end of the body portion 6 of the tool head 4 such that the first pinion 20 becomes disengaged from the first toothed rack 18 as the tool head 4 approaches its extended position, thereby decoupling the tool head 4 from the drive means as the tool head 4 before the tool head 4 reaches its extended position, such that the tool head 4 is decoupled from the drive means before the tip 10 of the tool member 8 makes impact with the surface of the rock to be broken. Preferably the first toothed rack 20 and first pinion 18 are arranged such that the first pinion 18 becomes disengaged from the first toothed rack 20 as the tip 10 of the tool member 8 passes through the opening in the end cap 14 of the guide tube 2.

A second toothed rack 22 is mounted on said at least one side of the body portion 6 of the tool head 4, parallel to and alongside the first toothed rack 18, a second pinion 24 being mounted on the output shaft of the motor 5, coaxially with and alongside the first pinion 18, such that the second pinion 24 drivingly engages the second toothed rack 22.

The second toothed rack extends substantially the full length of the tool head 4 such that the second pinion 24 remains engaged with the second toothed rack 22 over the full range of motion of the tool head 4 between its retracted and extended positions.

The second pinion 24 is preferably mounted on the output shaft of the motor via a one way coupling, such as a sprag or cam clutch, adapted to transmit rotary motion between the motor output shaft and the second pinion 24 in only one direction, specifically when the motor 5 is operated to raise or retract the tool head 4 within the guide tube 2 between its extended and retracted positions.

Other types of drive means for driving the tool head 4 between its retracted and extended positions are envisaged, such as a chain and wheel, toothed belt and wheel, recirculating ball screw or any other recto-linear drive. In addition the drive means could comprise a non-mechanical drive, such as a magnetic rail motor (a plurality of coils pole piece in the form of a linear motor) or as a solenoid. All these technologies may be considered for scaling the technology for larger or smaller impact energies.

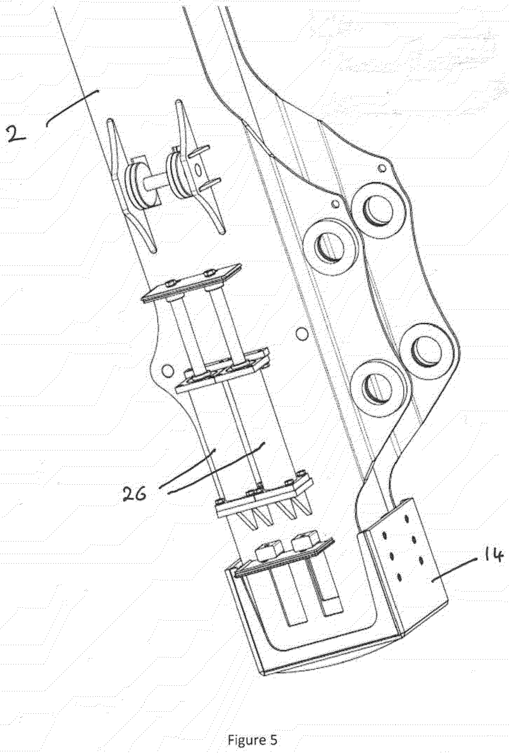

As best shown in Figure 5, shock absorbing buffers 26 may be mounted on a lower end of the guide tube 2 to absorb any impact between the tool head 4 and the end cap 14 of the guide tube 2 should the tool head 4 reach its fully extended position before the tool member 8 strikes the surface to be broken, thereby avoiding damage to the tool.

In a first stage of operation, the controller operates the electric motor 5 to drive the second pinion 24 along the second rack 22, to thereby raise the tool head 4 up the guide tube 2 until the tool head 4 is in its fully retracted or raised position, adjacent an upper end of the guide tube 2.

In a second stage, the controller operates the electric motor 5 to drive the first pinion 18 along the first rack 20 (the second pinion 22 being free to rotate on the output shaft of the motor 5 due to the one way coupling between the second pinion 22 and output shaft), thereby rapidly accelerating the tool head 4 towards its extended position.

During said second stage of operation, the tool head 4 continues to be accelerated in a downwards direction, until a point is reached whereat the first pinion 20 becomes disengaged from an upper end of the first rack 18, thereby decoupling the tool head 4 from the drive means. The tool head 4 continues on its downwards trajectory, due to inertia and under the effect of gravity, towards its extended position until the tip 10 of the tool member 8 impacts upon a surface to be broken.

Should the tool head 4 reach its fully extended position, the body portion 6 of the tool head 4 engages the end cap 14 and the shock absorbing buffers 26 provided at the lower end of the guide tube 2 prevent damage to the tool due to the impact of the tool head 4 with the end cap 14 of the guide tube 2.

The cycle is then repeated.

The controller may comprise a microprocessor programmed to accurately control the operation of the electric motor to accurately control the motion of the tool head to thereby optimise the rock breaking action of the tool head while minimising vibration and the transmission of impact forces to the components of the tool and its supporting structure, allowing the weight and size of the rock breaking tool to be greatly reduces compared to prior art devices. The use of electric power to operate the drive means avoids the problems associated with the use of pneumatic or hydraulic drives and enables the rock breaking tool to be used in a wide variety of different applications.

The invention is not limited to the embodiment described herein but can be amended or modified without departing from the scope of the present invention as defined by the appended claims.

## Claims

1. A tool for breaking rocks comprising a tool head (4) supported by a guide means (2) to be linearly displaceable with respect to the guide means (2) between a retracted position and an extended position, a distal end (10) of said tool head (4) extending from said guide means (2) to engage a surface to be broken when the tool head (4) is in its extended position; a drive means adapted to drive said tool head towards its retracted position in a first operation and to drive the tool head (4) towards its extended position in a second operation, said drive means including a drive part mounted on said guide means and a driven part mounted on the tool head and engaged by said drive part to be linearly displaceable with respect to the guide means upon operation of the drive part of the drive means; and a controller adapted to control operation of the drive means, wherein said drive means is electrically powered and wherein the driven part of the drive means is decoupled from the drive part of the drive means during said second operation as the tool head (4) approaches its extended position.

2. A tool as claimed in any preceding claim, wherein the guide means (2) is adapted to be arranged, in use, such that said tool head (4) extends from a lower end of said guide means (2) when in its extended position, the tool head being displaceable between its extended and retracted positions along a vertical axis.

3. A tool as claimed in claim 2, wherein the guide means is adapted to be mounted on an arm of an excavator.

4. A tool as claimed in any preceding claim, wherein said guide means (2) comprises a hollow tubular body within which said tool head (4) is axially slideable, said distal end (10) of the tool head (4) extending trough a hole (12) in an end (14) of the guide means (2) when in its extended position.

5. A tool as claimed in any preceding claim, wherein the drive means comprises a first rack (18) mounted on the tool head (4), said drive part of the drive means comprises a first motor driven pinion (20) mounted on the guide means (2) to be driven by an electric drive motor (5) and adapted to drivingly engage the first rack (18) of the driven part to displace the tool head (4) with respect to said guide means upon rotation of the pinion (20).

6. A tool as claimed in claim 5, wherein the first rack (18) is arranged on the tool head (4) such that the first pinion (20) disengages from an end of the first rack (18) as the tool head (4) approaches its extended position, thereby decoupling the drive part of the drive means from the driven part of the drive means.

7. A tool as claimed in any of claims 5 or 6, wherein said drive means further comprises a second rack (22) mounted on the tool head (4) and a second electric motor driven pinion (24) mounted on the guide means (2) and adapted to be drive by said electric drive motor (5) and drivingly engage the second rack (22) to displace said tool head (4) between its extended and retracted positions upon rotation of the second pinion (24) in a first direction, the second pinion (24) incorporating a clutch adapted to decouple the second pinion (24) from the drive motor (5) upon rotation of the second pinion (24) in a second direction, opposite said first direction.

8. A tool as claimed in claim 7, wherein said first and second pinions (18,24) are mounted coaxially on an output shaft of the drive motor (5), said first and second racks (20,22) being mounted alongside and parallel to one another on a side of the tool head (4).

9. A tool as claimed in claim 5, wherein the first pinion (18) incorporates a clutch under the control of said controller, whereby said clutch is adapted to decouple the first pinion (18) from the electric motor (5) before the tool head reaches its extended position.

10. A tool as claimed in any preceding claim, wherein said distal end of the tool head (4) terminates in a tip (10).

11. A tool as claimed in claim 10, wherein said tip (10) is separable from the remainder of the tool head (4) to allow replacement and/or exchange of the tip (10).

12. A tool as claimed in any preceding claim, wherein said guide means (2) includes shock absorbing means (26) acted upon by the tool head (4) when it reaches its extended position.

## Patentansprüche

1. Werkzeug zum Brechen von Gestein, umfassend einen Werkzeugkopf (4), der von einer Führungseinrichtung (2) getragen wird, um in Bezug auf die Führungseinrichtung (2) zwischen einer eingefahrenen Position und einer ausgefahrenen Position linear verschiebbar zu sein, wobei sich ein distales Ende (10) des Werkzeugkopfes (4) von der Führungseinrichtung (2) erstreckt, um mit einer zu brechenden Oberfläche in Eingriff zu kommen, wenn sich der Werkzeugkopf (4) in seiner ausgefahrenen Position befindet; eine Antriebseinrichtung, die dazu ausgelegt ist, den Werkzeugkopf in einem ersten Arbeitsgang in Richtung seiner eingefahrenen Position anzutreiben und den Werkzeugkopf (4) in einem zweiten Arbeitsgang in Richtung seiner ausgefahrenen Position anzutreiben, wobei die Antriebseinrichtung ein Antriebsteil, das an der Führungseinrichtung angebracht ist, und ein angetriebenes Teil, das an dem Werkzeugkopf angebracht ist und mit dem das Antriebsteil in Eingriff steht, beinhaltet, um bei Betrieb des Antriebsteils der Antriebseinrichtung in Bezug auf die Führungseinrichtung linear verschiebbar zu sein, und eine Steuerung, die dazu ausgelegt ist, den Betrieb der Antriebseinrichtung zu steuern, wobei die Antriebseinrichtung elektrisch mit Leistung versorgt wird und wobei der angetriebene Teil der Antriebseinrichtung während des zweiten Arbeitsgangs von dem Antriebsteil der Antriebseinrichtung entkoppelt wird, wenn sich der Werkzeugkopf (4) seiner ausgefahrenen Position nähert.

2. Werkzeug nach einem der vorhergehenden Ansprüche, wobei die Führungseinrichtung (2) dazu ausgelegt ist, im Gebrauch derart angeordnet zu sein, dass sich der Werkzeugkopf (4) von einem unteren Ende der Führungseinrichtung (2) erstreckt, wenn er sich in seiner ausgefahrenen Position befindet, wobei der Werkzeugkopf entlang einer vertikalen Achse zwischen seiner ausgefahrenen und eingefahrenen Position verschiebbar ist.

3. Werkzeug nach Anspruch 2, wobei die Führungseinrichtung dazu ausgelegt ist, an einem Arm eines Baggers angebracht zu werden.

4. Werkzeug nach einem der vorhergehenden Ansprüche, wobei die Führungseinrichtung (2) einen hohlen rohrförmigen Körper umfasst, in dem der Werkzeugkopf (4) axial verschiebbar ist, wobei sich das distale Ende (10) des Werkzeugkopfes (4) durch ein Loch (12) in einem Ende (14) der Führungseinrichtung (2) erstreckt, wenn es sich in seiner ausgefahrenen Position befindet.

5. Werkzeug nach einem der vorhergehenden Ansprüche, wobei die Antriebseinrichtung eine erste Zahnstange (18) umfasst, die an dem Werkzeugkopf (4) angebracht ist, wobei der Antriebsteil der Antriebseinrichtung ein erstes von einem Motor angetriebenes Ritzel (20) umfasst, das an der Führungseinrichtung (2) angebracht ist, um von einem elektrischen Antriebsmotor (5) angetrieben zu werden, und das dazu ausgelegt ist, mit der ersten Zahnstange (18) des angetriebenen Teils in Antriebseingriff zu kommen, um den Werkzeugkopf (4) bei Drehung des Ritzels (20) in Bezug auf die Führungseinrichtung zu verschieben.

6. Werkzeug nach Anspruch 5, wobei die erste Zahnstange (18) derart am Werkzeugkopf (4) angeordnet ist, dass sich das erste Ritzel (20) von einem Ende der ersten Zahnstange (18) löst, wenn sich der Werkzeugkopf (4) seiner ausgefahrenen Position nähert, wodurch der Antriebsteil der Antriebseinrichtung von dem angetriebenen Teil der Antriebseinrichtung entkoppelt wird.

7. Werkzeug nach einem der Ansprüche 5 oder 6, wobei die Antriebseinrichtung ferner eine zweite Zahnstange (22), die an dem Werkzeugkopf (4) angebracht ist, und ein zweites von einem Elektromotor angetriebenes Ritzel (24) umfasst, das an der Führungseinrichtung (2) angebracht und dazu ausgelegt ist, von dem elektrischen Antriebsmotor (5) angetrieben zu werden und mit der zweiten Zahnstange (22) in Antriebseingriff zu kommen, um den Werkzeugkopf (4) bei Drehung des zweiten Ritzels (24) in einer ersten Richtung zwischen seiner ausgefahrenen und seiner eingefahrenen Position zu verschieben, wobei das zweite Ritzel (24) eine Kupplung enthält, die dazu ausgelegt ist, das zweite Ritzel (24) bei Drehung des zweiten Ritzels (24) in einer zweiten, der ersten Richtung entgegengesetzten Richtung von dem Antriebsmotor (5) zu entkoppeln.

8. Werkzeug nach Anspruch 7, wobei das erste und das zweite Ritzel (18, 24) koaxial auf einer Ausgangswelle des Antriebsmotors (5) angebracht sind und die erste und die zweite Zahnstange (20, 22) nebeneinander und parallel zueinander auf einer Seite des Werkzeugkopfes (4) angebracht sind.

9. Werkzeug nach Anspruch 5, wobei das erste Ritzel (18) eine Kupplung enthält, die von der Steuerung gesteuert wird, wobei die Kupplung dazu ausgelegt ist, das erste Ritzel (18) von dem Elektromotor (5) zu entkoppeln, bevor der Werkzeugkopf seine ausgefahrene Position erreicht.

10. Werkzeug nach einem der vorhergehenden Ansprüche, wobei das distale Ende des Werkzeugkopfes (4) in einer Spitze (10) endet.

11. Werkzeug nach Anspruch 10, wobei die Spitze (10) von dem Rest des Werkzeugkopfes (4) trennbar ist, um einen Ersatz und/oder Austausch der Spitze (10) zu ermöglichen.

12. Werkzeug nach einem der vorhergehenden Ansprüche, wobei die Führungseinrichtung (2) eine stoßdämpfende Einrichtung (26) beinhaltet, auf die der Werkzeugkopf (4) einwirkt, wenn er seine ausgefahrene Stellung erreicht.

## Revendications

1. Outil brise-roches comprenant une tête d'outil (4) soutenue par un moyen de guidage (2) pour pouvoir se déplacer linéairement par rapport au moyen de guidage (2) entre une position rétractée et une position étendue, une extrémité distale (10) de ladite tête d'outil (4) s'étendant à partir dudit moyen de guidage (2) afin de venir en prise avec une surface à briser lorsque la tête d'outil (4) se trouve dans sa position étendue ; un moyen d'entraînement conçu pour entraîner ladite tête d'outil vers sa position rétractée dans une première opération et pour entraîner ladite tête d'outil (4) vers sa position étendue dans une seconde opération, ledit moyen d'entraînement comportant une partie d'entraînement montée sur ledit moyen de guidage et une partie entraînée montée sur la tête d'outil et en prise avec ladite partie d'entraînement pour pouvoir se déplacer linéairement par rapport au moyen de guidage lors de le fonctionnement de la partie d'entraînement du moyen d'entraînement ; et un dispositif de commande conçu pour commander le fonctionnement du moyen d'entraînement, dans lequel ledit moyen d'entraînement est alimenté électriquement et dans lequel la partie entraînée du moyen d'entraînement est découplée de la partie d'entraînement du moyen d'entraînement pendant la seconde opération lorsque la tête d'outil (4) s'approche de sa position étendue.

2. Outil selon l'une quelconque revendication précédente, dans lequel le moyen de guidage (2) est conçu pour être disposé, en utilisation, de sorte que ladite tête d'outil (4) s'étend à partir d'une extrémité inférieure dudit moyen de guidage (2) lorsqu'elle se trouve dans sa position étendue, la tête d'outil pouvant se déplacer entre ses positions étendue et rétractée le long d'un axe vertical.

3. Outil selon la revendication 2, dans lequel le moyen de guidage est conçu pour être monté sur un bras d'une excavatrice.

4. Outil selon l'une quelconque revendication précédente, dans lequel ledit moyen de guidage (2) comprend un corps tubulaire creux à l'intérieur duquel ladite tête d'outil (4) peut coulisser axialement, ladite extrémité distale (10) de la tête d'outil (4) s'étendant à travers un trou (12) dans une extrémité (14) du moyen de guidage (2) lorsqu'elle se trouve dans sa position étendue.

5. Outil selon l'une quelconque revendication précédente, dans lequel le moyen d'entraînement comprend une première crémaillère (18) montée sur la tête d'outil (4), ladite partie d'entraînement du moyen d'entraînement comprend un premier pignon (20) entraîné par moteur monté sur le moyen de guidage (2) afin d'être entraîné par un moteur (5) d'entraînement électrique et conçu pour venir en prise par entraînement avec la première crémaillère (18) de la partie entraînée afin de déplacer la tête d'outil (4) par rapport audit moyen de guidage lors de la rotation du pignon (20).

6. Outil selon la revendication 5, dans lequel la première crémaillère (18) est disposée sur la tête d'outil (4) de sorte que le premier pignon (20) se libère d'une extrémité de la première crémaillère (18) lorsque la tête d'outil (4) s'approche de sa position étendue, découplant ainsi la partie d'entraînement du moyen d'entraînement de la partie entraînée du moyen d'entraînement.

7. Outil selon l'une quelconque des revendications 5 ou 6, dans lequel ledit moyen d'entraînement comprend en outre une seconde crémaillère (22) montée sur la tête d'outil (4) et un second pignon (24) entraîné par moteur électrique monté sur le moyen de guidage (2) et conçu pour être entraîné par ledit moteur (5) d'entraînement électrique et venir en prise par entraînement avec la seconde crémaillère (22) afin de déplacer ladite tête d'outil (4) entre ses positions étendue et rétractée lors de la rotation du second pignon (24) dans une première direction, le second pignon (24) incorporant un embrayage conçu pour découpler le second pignon (24) du moteur (5) d'entraînement lors de la rotation du second pignon (24) dans une seconde direction, opposée à ladite première direction.

8. Outil selon la revendication 7, dans lequel lesdits premier et second pignons (18, 24) sont montés coaxialement sur un arbre de sortie du moteur (5) d'entraînement, lesdites première et seconde crémaillères (20, 22) étant montées côte à côte et parallèlement l'une à l'autre sur un côté de la tête d'outil (4).

9. Outil selon la revendication 5, dans lequel le premier pignon (18) incorpore un embrayage sous la commande dudit dispositif de commande, selon lequel ledit embrayage est conçu pour découpler le premier pignon (18) du moteur (5) électrique avant que la tête d'outil n'atteigne sa position étendue.

10. Outil selon l'une quelconque revendication précédente, dans lequel ladite extrémité distale de la tête d'outil (4) se termine par une pointe (10).

11. Outil selon la revendication 10, dans lequel ladite pointe (10) peut être séparée du reste de la tête d'outil (4) afin de permettre le remplacement et/ou l'échange de la pointe (10).

12. Outil selon l'une quelconque revendication précédente, dans lequel ledit moyen de guidage (2) comporte un moyen amortisseur de chocs (26) sur lequel agit la tête d'outil (4) lorsqu'elle atteint sa position étendue.
